# EUROPEAN PATENT SPECIFICATION

(11) **EP 3 577 637 B1**
(45) Date of publication and mention of the grant of the patent: **06.04.2022**
(21) Application number: 18708478.5
(22) Date of filing: 05.02.2018
(51) Int. Cl.: G07F 7/12, G07F 7/08, G06K 7/10, G06K 7/14, G01N 21/87, G01N 33/38, B42D 25/305

(54) **ANTI-COUNTERFEITING DEVICE AND CORRESPONDING IDENTIFICATION DEVICE**
FÄLSCHUNGSSICHERUNGSVORRICHTUNG UND ENTSPRECHENDE IDENTIFIKATIONSVORRICHTUNG
DISPOSITIF ANTI-CONTREFAÇON ET DISPOSITIF D'IDENTIFICATION CORRESPONDANT

(30) Priority: 06.02.2017 IT 201700012647
(43) Date of publication of application: 11.12.2019
(73) Proprietor: DIAMSAFE S.R.L., 00186 Roma (IT)
(72) Inventor: Caramelli, Antonio, 00164 Rome (IT); Bussa, Jean Luc, 00152 Rome (IT); Falcioni, Andrea, 00186 Roma (IT)
(74) Representative: Perronace, Andrea
(86) International application number: PCT/IB2018/050704
(87) International publication number: WO 2018/142360

(56) References cited:
- EP-A1- 1 042 665
- EP-A2- 0 613 628
- WO-A1-99/30307
- CH-A1- 709 000
- US-A- 5 974 150
- US-A1- 2005 103 840
- US-A1- 2008 025 594
- US-A1- 2009 070 273
- US-A1- 2011 096 955
- US-A1- 2015 060 699
- US-A1- 2015 223 580

## Description

The present invention relates to an anti-counterfeiting device.

In particular, said anti-counterfeiting device includes a multifaceted precious stone and lighting means for lighting such multifaceted precious stone.

More particularly, the invention relates to the structure of an anti-counterfeiting device to be associated with a product to guarantee the origin of the product itself.

This anti-counterfeiting device can be delivered to a purchaser of the product or to a user of the product or it can be coupled to the product itself in a removable or non-removable way.

By product means any good that a producer is able to produce and / or market.

Currently, a label containing the product information is applied to the product itself.

In addition or as an alternative to a label, the information of a product can be stored in a barcode applied to the product or to the label itself.

However, the fact that the information of a product is reported in a label associated with the product or contained in a barcode has some disadvantages. A disadvantage is given by the fact that said label or said barcode can be easily reproduced and affixed on a further product, so that the origin of the product is no longer guaranteed.

Furthermore, to certify the origin of a product, a hologram can be applied to the product itself.

However, even applying a hologram to the product has a disadvantage.

In fact, although an hologram is difficult to reproduce, it is often reproduced and applied on non-original products.

US 2015 223580 A1 (KINNEY CORMAC L [US] ET AL) discloses a tamperproof diamond package which comprises a package body; at least one chip embedded in the package body and at least one antenna configured to enable communication with the chip; anti-counterfeiting visual impressions on the package body; a diamond pouch formed at a predetermined section within the package body; and one or more diamonds located inside the diamond pouch and an outer covering encasing the package body and configured to reveal any tampering with the one or more diamonds located in the diamond pouch. The diamond package can be credit card shaped and also contains serial number and website information and be provided in nominal dollar values. An associated diamond exchange system utilizes the diamond packages and provides a registration server which stores unique identifying information that enable interrogating the individual diamond packages and checking their authenticity with the registration server.

Other general prior art dealing with the subject is disclosed in EP 0 613 628 A2 (NEUMAN ISAAC [BE]), US 2009;070273 A1 (MORYTO WILLIAM [US]), US 5 974 150 A (KAISH NORMAN [US] ET AL), US 2015/060699 A1 (JANOFF ANDREW S [US]), US 2005'103840 A1 (BOLES JULIAN D [GB]), CH 709 000 A1 (SAVELLI OLLIVIER [FR]: NYS FILIP [CH]), WO 99/30307 A1 (OELKERS RUD W MARKET [DE]. OELKERS RUDOLF W [DE]), US 2008/025594 A1 (METZGER GARY [US]), US 2011 096955 A1 (VOLOSHYNOVSKIY SVIATOSLAV [CH] ET AL).

In light of the above, it is clear that there is a strongly felt need to certify the origin of a product in such a way that a buyer has the certainty of having purchased an original product or that a user has the certainty of using an original product.

The object of the present invention is to overcome said disadvantages by providing an anti-counterfeiting device to be associated with a product, by which the origin of the product can be verified, so that the possibility that said product is counterfeited is excluded.

This is due to the fact that said counterfeiting device comprises a multifaceted precious stone, which is a unique piece forged by nature. In fact, there are no two identical multifaceted precious stones.

In this way, when the anti-counterfeiting device is associated with a product, a unique link is created between the multifaceted precious stone of said anti-counterfeiting device and said product.

In a first aspect, the present invention includes an anti-counterfeiting device for verification of the origin of a product when the anti-counterfeiting device is associated with the product comprising:
- a supporting element;
- a multifaceted precious stone, arranged at least partially inside said supporting element in such a way that said multifaceted precious stone is in a first predetermined fixed position with respect to said supporting element and has a first part exposed to the outside, said first part comprising at least a first portion of a first facet termed "table" and/or at least a second portion of at least a second facet disposed on a part of said multifaceted precious stone termed "crown";
- lighting means for lighting said multifaceted precious stone, wherein said lighting means are configured to emit a light radiation and arranged in a second predetermined fixed position with respect to said supporting element and to said multifaceted precious stone in such a way that said light radiation insists on a second part of said multifaceted precious stone, different from said first part, where said second part comprises at least a third portion of at least a third facet arranged on a part of said multifaceted precious stone termed "pavilion", and wherein said lighting means (3) are arranged inside said supporting element (1).

Said anti-counterfeiting device may comprise a first seat for housing at least partially said multifaceted precious stone, arranged inside said supporting element, and/or a second seat for housing at least partially said lighting means, arranged inside said supporting element.

In a second aspect, the present invention includes an anti-counterfeiting device for verification of the origin of a product when the anti-counterfeiting device is associated with the product comprising:
- a supporting element (1);
- a multifaceted precious stone (2), arranged at least partially inside said supporting element (1) in such a way that said multifaceted precious stone (2) is in a first predetermined fixed position with respect to said supporting element (1) and has a first part exposed to the outside, said first part comprising at least a first portion of a first facet (21) termed "table" and/or at least a second portion of at least a second facet (22) disposed on a part of said multifaceted precious stone (2) termed "crown" (C);
wherein said supporting element (1) comprises a first surface or upper surface (1A), a second surface or lower surface (1B), opposite to said first surface (1A), and a third surface or lateral surface (1C), arranged between said first surface (1A) and said second surface (1B);
wherein said supporting element (1) has at least one opening (10) to allow a quantity of light radiation from lighting means (3) external to said supporting element (1) to enter into said supporting element (1), wherein said at least one opening (10) is positioned on said first surface (1A) and/or said second surface (1B) and/or said third surface (1C), and a cavity (11) extending from said at least opening (10) to said multifaceted precious stone (2) to allow said quantity of light radiation to reach said multifaceted precious stone in such a way that said quantity of light radiation insists on a second part of said multifaceted precious stone (2), different from said first part, wherein said second part comprises at least a third portion of at least a third facet (23) arranged on a part of said multifaceted precious stone (2) termed "pavilion" (P).

Furthermore, said anti-counterfeiting device may comprise a closing element for closing said opening having a predetermined first degree of transparency, wherein said predetermined first degree of transparency is such to allow the passage of a first quantity of said light radiation inside said cavity.

Alternatively, said anti-counterfeiting device may comprise an element having a predetermined second degree of transparency arranged inside said cavity, wherein said second predetermined degree of transparency is such to allow the passage of a second quantity of said light radiation inside said cavity.

Furthermore, in a first variant embodiment, said anti-counterfeiting device may comprise a first terminal and a second terminal to allow the application of power supplying means for supplying power to said lighting means, wherein said first terminal and said second terminal are arranged on said supporting element and connected to said lighting means through respectively first electrical connection means and second electrical connection means.

In a second variant embodiment, said anti-counterfeiting device may comprise power supplying means, for supplying power to said lighting means, which may be arranged inside said supporting element or outside said supporting element.

In particular, said supplying power means may be configured to be activated by induction energy transfer.

A further embodiment of the invention includes an identification system for identifying a multifaceted precious stone, configured to identify the multifaceted precious stone arranged in the aforementioned anti-counterfeiting device.

Said identifying system comprises an anti-counterfeiting device for verification of the origin of a product when the anti-counterfeiting device is associated with the product, and:
- image acquiring means for acquiring at least one image of said multifaceted precious stone, wherein said image acquiring means are arranged in such a way that said at least one image is related to said first part of said multifaceted previous stone; said image acquiring means being arranged at a predetermined distance from said multifaceted precious stone;
- a database in which the following data are stored:
   ∘ a unique identification code of one or more predetermined multifaceted precious stones,
   ∘ one or more further images concerning a further first part of each of said predetermined multifaceted precious stones, wherein said further first part comprises at least a further first portion of a further first facet termed "table" and/or at least a further second portion of at least a further second facet disposed on a further part of said predetermined precious stone termed "crown", each further image being obtained at a respective predetermined further distance from said predetermined multifaceted precious stone when the respective predetermined multifaceted precious stone has been lighted from a further light radiation insisting on a further second part of said predetermined precious stone, where said further second part comprises at least a further third portion of at least a further third facet disposed on a further part of said predetermined multifaceted precious stone termed "pavilion";
   ∘ one or more data of a product associated to each of said predetermined multifaceted precious stones,
- comparison means for comparing said at least one image, acquired with said image acquiring means, with one or more further images, stored in said database; wherein said comparison means are connected to said database.

In a first variant embodiment, said image acquiring means comprise an optical group comprising at least one magnifying lens, and said comparison means may comprise a display.

In a second variant embodiment, said image acquiring means may be digital image acquiring means, and said comparison means may comprise a recognition unit for recognizing said multifaceted precious stone from said first part of said multifaceted precious stone, wherein said recognition unit is connected to said image acquiring means and is configured for:
∘ performing a comparison between at least one image, acquired by said image acquiring means, and one or more further images, stored in said database;
∘ measuring the degree of similarity between said at least one image and said one or more further images.

According to a further embodiment, said anti-counterfeiting device may comprise a predetermined information set configured to select a predetermined multifaceted precious stone; said at least one image being compared only with one or more further images of said predetermined multifaceted precious stone selected by means of said predetermined information set.

In particular, said predetermined information set may comprise a sequence of characters identifying the unique identification code of a multifaceted precious stone, stored in said database.

Furthermore, said predetermined information set may be arranged on said anti-counterfeiting device or stored in a QR code, arranged on said anti-counterfeiting device, or stored in a bar code, arranged on said anti-counterfeiting device, or stored in a electronic and/or magnetic support, arranged on said anti-counterfeiting device.

Advantageously, said identification system may comprise a base and positioning means for positioning said anti-counterfeiting device in such a way that the position of said anti-counterfeiting device is fixed with respect to said base.

In the embodiments described below, with reference to figures attached, said multifaceted precious stone is a diamond. However, the device anti-counterfeiting can include any kind of multifaceted precious stone different from a diamond, without thereby departing from the scope of the invention.

The present invention will now be described, by way of illustration but not by way of limitation, according to its embodiments, with particular reference to the attached figures, wherein:
Figure 1 shows the anti-counterfeiting device, according to the invention, including a diamond and lighting means for lighting light said diamond;
Figure 2 is a view from the top of the diamond of the anti-counterfeiting device, when the diamond is lighted;
Figure 3 shows the anti-counterfeiting device of figure 1 connected to said power supplying means for supplying power to said lighting means;
Figure 4 shows a side view in section of a second embodiment of the device according to the invention;
Figure 5 shows a side view in section of a third embodiment of the device according to the invention;
Figure 6 shows a side view in section of a fourth embodiment of the device according to the invention;
Figure 7 shows a first embodiment of an identification system for identify the diamond stored into the anti-counterfeiting device shown in Figure 1;
Figure 8 shows some saved data in a database of the identification system shown in Figure 7, related to images of predetermined diamonds;
Figure 9 shows a second embodiment of an identification system for identifying the diamond arranged into the anti-counterfeiting device shown in Figure 1.

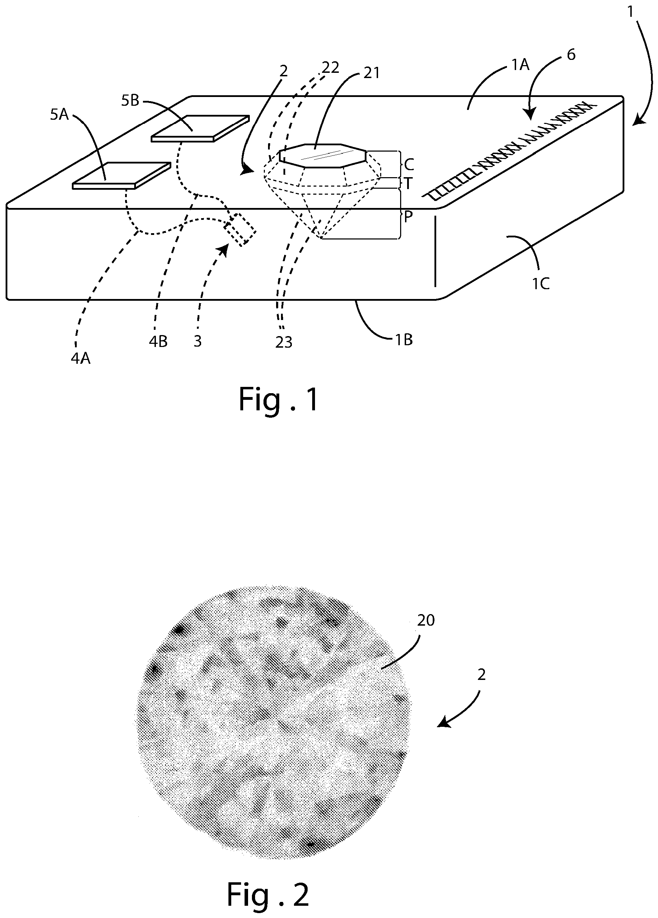

With particular reference to Figure 1 it's described a first embodiment of the device according to the invention;

Said anti-counterfeiting device comprises:
- a supporting element 1;
- a multifaceted precious stone 2, arranged at least partially inside said supporting element 1 in such a way that said multifaceted precious stone 2 is in a first predetermined fixed position with respect to said supporting element 1 and has a first part exposed to the outside, said first part comprising at least a first portion of a first facet 21 termed "table" and/or at least a second portion of at least a second facet 22 disposed on a part of said multifaceted precious stone 2 termed "crown" C;
- lighting means 3 for lighting said multifaceted precious stone 2, wherein said lighting means are configured to emit a light radiation and arranged in a second predetermined fixed position with respect to said supporting element 1 and to said multifaceted stone precious 2 in such a way that said light radiation insists on a second part of said multifaceted precious stone 2, different from said first part, where said second part comprises at least a third portion of at least a third facet 23 arranged on a part of said multifaceted precious stone 2 termed "pavilion" P.

As can be seen also from in Figure 1, said crown C comprises a plurality of second facets 22 and said pavilion P comprises a plurality of third facets 23.

For sake of information completeness, the part of said diamond placed between the crown and the pavilion is called girdle T.

In this described embodiment, sand first part includes at least a first portion of a first facet 21 called "table" (it's the only facet of said diamond 2 exposed to the outside) and said second part corresponds to ad least a third portion of a third facet 23 of said "pavilion" P.

Below, comfortably, reference will be made directly to table in order to identify the first facet 21 of the diamond 2.

However, as already said, the first part of the diamond 2 exposed to the outside may comprise at least a second portion of one or more second facets 22 of said crown C, in alternative or in combination with said at least a first portion of said table 21, without thereby departing from the scope of the invention.

With reference to the supporting element 1, said supporting element 1 includes a first surface or upper surface 1A, a second surface or lower surface 1B, opposite to said first surface, and a third surface or side surface 1C.

In this described embodiment, said first surface 1A lies on a first plan and said diamond 2 is arranged into said supporting element 1, in a way such that table 21 lies on said first plan or substantially lies on said first plan.

In other words, table 21 is coplanar or substantially coplanar with said first surface 1A.

However, it is not strictly necessary that said table 21 is coplanar with said first surface 1A.

The table 21 of diamond 2 could be placed in way such that said table itself or a first portion of that table forms an angle with said first surface 1A of the supporting element 1 without thereby departing from the scope of the invention.

It is essential that a first part of said diamond comprises at least a first portion of said table 21 and/or at least a second portion of at least a second facet 22 of said crown C is exposed to the outside to allow a quantity of light radiation (which is emitted from said lighting means 3 and it propagates inside of the diamond 2) to exit from the diamond 2 through said first part.

According to the predetermined first position of said diamond 2, said predetermined first position is fixed with respect to said supporting element 1.

Furthermore, although not shown in figure, said anti-counterfeiting device may comprise a first seat for storing at least partially the diamond 2, arranged inside said supporting element 1.

According to the predetermined second position of said lighting means 3, said predetermined second position is fixed with respect to said supporting element 1 and to said diamond 2.

Furthermore, said lighting means 3 are disposed at a predetermined distance from the pavilion P of said diamond 2. However, said lighting means can be disposed on direct contact with at least a third facet 23 of said pavilion P, without thereby departing from the scope of the invention.

In the first embodiment disclosed, said third lighting means 3 are placed inside of said supporting element 1.

In particular, in the described embodiment, said lighting means 3 comprise a LED.

However, although not shown in Figure 1 said lighting means 3 may comprise a plurality of LEDs.

In alternative to the presence of one or more LEDs, said lighting means 3 can comprise at least a lighting incandescence source or at least a lighting phosphorescent source or at least a lighting electroluminescence source or at least a neon electroluminescence source without thereby departing from the scope of the invention.

Furthermore, although not shown in figure, said anti-counterfeiting device may comprise a second seat for storing at least partially said lighting means, placed inside said supporting element 1.

For example, said second seat can be a ring-shaped seat, lying around said diamond 2.

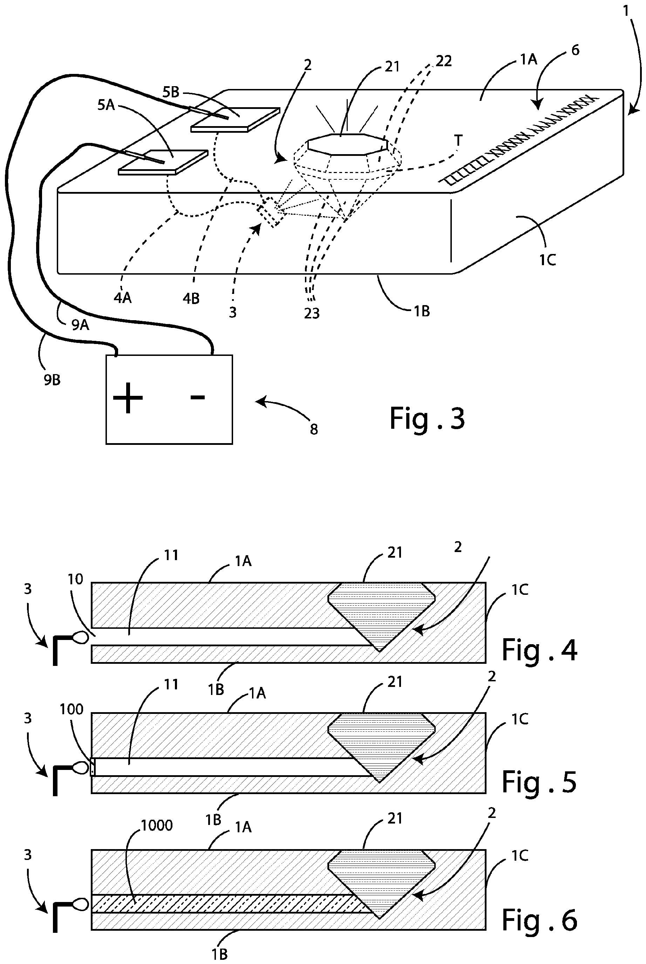

In the first embodiment described, said lighting means 3 are supplied by power supplying means 8, external to the counterfeiting device, and said anti-counterfeiting device is configured for being connected to said power supplying means 8 (as later described with reference to Figure 3).

As already said, said lighting means 3 occupy a fixed position with respect said supporting element 1 and said diamond 2 in such a way that light radiation emitted by said lighting means 3 reflects on a second part of the diamond 2 including at least a third portion of at least a third facet disposed on the pavilion 23 of the diamond 2 itself.

The fixed position of said diamond 2 with respect to the supporting element 1 and the fixed position of said lighting means 3 with respect said supporting element 1 and to said diamond 2 allow the diamond to be lighted always in the same way, each time that said lighting means emit a lighting radiation on said diamond.

When someone looks the diamond 2 through the image acquiring means for acquiring an image of said diamond, such person will observe the same image of the diamond 2, every time that this one is lighted from said lighting means 3, providing this person uses always the same image acquiring means and that said image acquiring means are disposed always on a predetermined distance from said diamond.

A first quantity of light radiation emitted from said lighting means reflects and/or spreads from said second part of said diamond 2 and a second quantity of light radiation is refracted. Said second quantity of light radiation propagates inside the diamond 2 and can be reflected and/or absorbed and/or refracted, depending on the physical characteristics of internal part of the diamond itself.

A third quantity of light radiation exits from said diamond 2 through said first part of said diamond 2.

In the first embodiment described, said third quantity of light radiation exits from said diamond 2 through the table 21, being the only facet which is exposed on the outside, as the remaining part of said diamond 2 (and in particular the part of said diamond 2 called crown C) is arranged inside the supporting element 1.

However, although not shown, said third quantity of light radiation can exit from said diamond 2 through at least a first portion of the table 21 and at least a second portion of at least a second facet 22 of said crown C or only through at least a second portion of at least a facet 22 of said crown C.

When said diamond 2 is lighted by the light radiation emitted by said lighting means 3 the physical features of one or more facets and/or the further physical features of at least an internal portion of the diamond generate zones with respective degrees of brightness, based on the single physical property and/or to the further single physical property. These areas are visible if the diamond is observed through the image acquiring means which can comprise an optical group including at least a lens of magnification or digital image acquiring means (such for example a digital camera).

By "physical properties" reference is made to one or more cavity and/or protrusions that can be present on the surface of a facet of the diamond and that make this surface not smooth.

Cavity and protrusions can be due to the cutting process of the diamond.

By "further physical properties" reference is made to one or more inclusions that can be present inside of the diamond, such for example one or more plans of accretion or one or more plans of twining or one or more crystals.

Although not shown, said supporting element 1 can comprise a covering of transparent material, sized to protect at least the part of the diamond 2 exposed outside, i.e. said first part, in order to avoid accidental abrasions of it.

Figure 2 is a view from the top of the diamond 2 when lighted.

As can be seen in Figure 2, areas of the diamond with different degrees of brightness are visible.

Figure 3 shows the anti-counterfeiting device connected to power supplying means 8 for supplying power to the lighting means.

In the first embodiment described, said anti-counterfeiting device is configured for being connected to said power supplying means 8, positioned outside of said anti-counterfeiting device.

These power supplying means may comprise a battery.

In this described embodiment, said anti-counterfeiting device includes a first terminal 5A and a second terminal 5B for allowing the application of said power supplying means 8.

Said first terminal 5A and said second terminal 5B are disposed on said supporting element 1 and are connected to said lighting means 3 via respectively first electrical connection means 4A and second electrical connection means 4B.

In this described embodiment, said first electrical connection means 4A and said second electrical connection means 4B are arranged inside the supporting element 1 and include respectively a first electric wire and a second electric wire.

However, said first electrical connection means 4A and said second electrical connection means 4B can be stored partly at the inside of said supporting element 1 without thereby departing from the scope of the invention.

Furthermore, it is not necessary that said first electrical connection means 4A and said second electrical connection means 4B comprise each one his own electric wire.

As it can be seen from Figure 3 said power supplying means 8 are connected to said first terminal 5A and to said second terminal 5B through a respective electric wire 9A and 9B and quantity of electric power can reach said lighting means 3 through said first electrical connection means 4A and said second electrical connection means 4B.

The supporting element 1 is made in a kind of material that does not allow the passage of electric power for avoiding short circuits between said first terminal 5A and said second terminal 5B.

For example, said material can be a material with a predetermined degree of rigidity, such for example neoprene or a plastic material.

In alternative, the supporting element 1 can be equipped with a first insulating coating for insulating said first terminal 5A and said first electrical connection means 4A and a second insulating coating for insulating said second terminal 5B and said second electrical connection means 4B.

In alternative, the supporting element 1 can be a conductive material for conducting electric power, such as for example a metallic material.

In a first variant, not shown in the pictures, said anti-counterfeiting device can comprise said power supplying means and said power supplying means can be inside of said supporting element 1.

In a second variant, not shown in the pictures, said anti-counterfeiting device can comprise said power supplying means and said power supplying means can be outside of said supporting element 1.

In each of these embodiments, the anti-counterfeiting device can be equipped with a switch on/off button that allows to switch on / switch off said power supplying means.

Furthermore, said power supplying means can be configured for being activated through power transfer via induction.

Said anti-counterfeiting device can have reduced dimensions, such as be considered a miniaturized device. For example, the thickness of the supporting element 1 can be lower than 3mm and each surface 1A, 1B of said supporting element 1 can have an area of 1cm².

Advantageously, the dimensions of the anti-counterfeiting device allow its application on a product such as a label or be part of that label.

Furthermore, said anti-counterfeiting device comprises a predetermined set of information 6 configured for selecting at least another picture of a predetermined multifaceted precious stone stored in a database of an identification system for identifying a multifaceted precious stone (as described below).

Conveniently, said predetermined set of information 6 allows a buyer or user to verify whether the diamond arranged in the anti-counterfeiting device is diamond represented by a further image, saved in said database, and whether the product itself (to which said anti-counterfeiting device is associated) is the product purchased from the buyer or used by the user.

In particular, in first embodiment described, said predetermined set of information 6 is arranged on said anti-counterfeiting device and includes a sequence of characters identifying the unique identification code of the diamond 2.

More in particular, said predetermined set of information 6 is arranged on said first surface 1A of the anti-counterfeiting device.

However, said predetermined set of information 6 can be saved or into a QR code or in bar code or in any electronic support and/or magnetic one, arranged on said anti-counterfeiting device, without thereby departing from the scope of the invention.

A second embodiment of the anti-counterfeiting device is shown in figure 4.

Differently from the first embodiment, in that second embodiment, said supporting element 1 has at least an opening 10 to allow a quantity of light radiation emitted from said lighting means 3 to enter in said supporting element 1 and a cavity 11 extending from said at least opening 10 to said diamond 2 to allow to said quantity of light radiation to reach said diamond 2, wherein said cavity 11 is positioned inside of said supporting element 1.

In particular, in the second embodiment, said supporting element 1 has a single opening 10 and said opening 10 is positioned on said third surface 1C.

However, although not shown in Figure 4, said supporting element can have more than one opening.

Furthermore, said opening 10 can be positioned on said first surface 1A and/or said second surface 1B and/or said third surface 1C, without thereby departing from the scope of the invention.

Differently from the first embodiment of the anti-counterfeiting device, said lighting means 3 are external to said supporting element 1.

A third embodiment of the anti-counterfeiting device is shown in Figure 5.

Differently from the second embodiment, said anti-counterfeiting device includes a closing element 100 for closing said opening 10.

Said closing element 100 has a predetermined first degree of transparency which allows the passage of a first quantity of light radiation (emitted from said lighting means 3) inside the cavity 11.

In other words, the material of said closing element 100 allows a first amount of light radiation to enter in the supporting element 1 and to reach the diamond 2.

A fourth embodiment of the anti-counterfeiting device is shown in Figure 6.

Differently from the second embodiment, it is possible to insert inside of the cavity 11 an element 1000 which has a predetermined second degree of transparency which allows the passage of at least a second quantity of light radiation (emitted from said lighting means 3) inside the cavity itself.

For example, said element 1000 can be an optical fiber.

With reference to said second embodiment, to said third embodiment and to said fourth embodiment, above described, said lighting means (disposed outside said supporting element 1) comprise a LED.

However, although not shown, said lighting means 3 can comprise a plurality of LEDs. In particular, if said lighting means include a plurality of LEDs, it is preferable that the LEDs of that plurality of LEDs are arranged according to a matrix to generate a uniform or substantially uniform light radiation. Alternatively, said lighting means 3 can comprise at least a lighting incandescence source or at least a lighting phosphorescent source or at least a lighting electroluminescence source or at least a neon electroluminescence source without thereby departing from the scope of the invention.

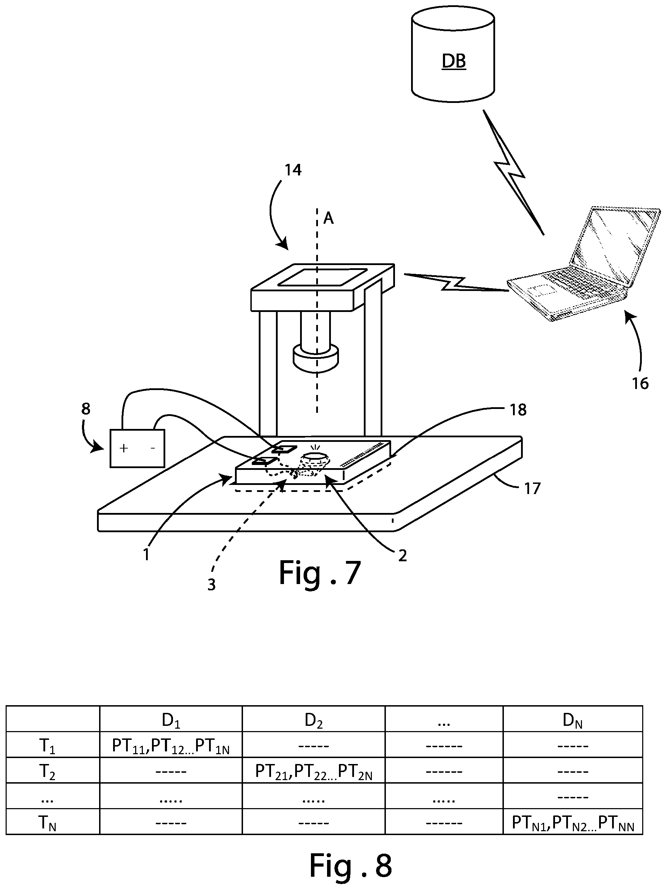

A first embodiment of the identification system for identifying a multifaceted precious stone is shown in Figure 7.

Said identification system is configured to identify the multifaceted precious stone located onto the anti-counterfeiting device, i.e. the diamond 2.

Said identification system includes said anti-counterfeiting device and comprises even further:
- image acquiring means for acquiring at least one image of said diamond 2, where said image acquiring means are arranged in such way that said at least one image refers to said first part of said diamond 2;
- a database DB in which are stored the following data:
   ○ a unique identification code of one or more predetermined multifaceted precious stones D₁,D₂...D_{N},
   ○ one or more further images PT₁₁,PT_{12...}PT_{1N}, PT₂₁,PT_{22...}PT_{2N},...PT_{N1},PT_{N2...}PT_{NN} concerning a further first part of each of said predetermined multifaceted precious stones D₁,D₂...D_{N}, where said further first part comprises at least a further first portion of a further first facet termed "table" and/or at least a further second portion of at least a further second facet disposed on a further part of said predetermined precious stone termed "crown", each further image PT₁₁,PT_{12...}PT_{1N}, PT₂₁,PT_{22...}PT_{2N},... PT_{N1},PT_{N2...}PT_{NN} being obtained at a respective predetermined further distance from said predetermined multifaceted precious stone D₁,D₂...D_{N} when the respective predetermined multifaceted precious stone D₁,D₂...D_{N} has been lighted from a further light radiation insisting on a further second part of said predetermined precious stone D₁,D₂...D_{N}, where said further second part comprises at least a further third portion of at least a further third facet disposed on a further part of said predetermined multifaceted precious stone termed "pavilion";
   ○ one or more data of a product associate to each one of said predetermined diamonds D₁,D₂...D_{N},
- comparison means 15,16 for comparing said at least one image, acquired with said image acquiring means 13,14, with one or more further images PT₁₁, PT₁₂...PT_{1N}, PT₂₁,PT₂₂...PT_{2N},... PT_{N1},PT_{N2}...PT_{NN}, stored in said database DB; where said comparison means 15,16 are connected to said database DB.

Furthermore, said anti-counterfeiting device includes a predetermined set of information 6 configured to select a predetermined diamond D₁,D₂...D_{N}, so that said one or further images are limited to images of said predetermined diamond D₁,D₂...D_{N}.

Advantageously, once selected a predetermined diamond D₁,D₂...D_{N} through said predetermined set of information 6 said at least one image is compared only with the further images of said predetermined diamond.

Said image acquiring means are digital image acquiring means, and said comparison means 16 comprise a recognition unit for recognizing said multifaceted precious stone 2 from said first part of said multifaceted precious stone 2, wherein said recognition unit is connected to said image acquiring means 14 and is configured for:
- performing a comparison between at least one image, acquired by said image acquiring means 14, and one or more further images PT₁₁, PT₁₂...PT_{1N}, PT₂₁, PT₂₂...PT2_{N},... PT_{N1},PT_{N2}...PT_{NN}, stored in said database DB said one or more further images PT₁₁, PT₁₂...PT_{1N}, PT₂₁,PT₂₂...PT2_{N},... PT_{N1},PT_{N2}...PT_{NN} once the image/images of said predetermined multifaceted precious stone D₁,D₂...D_{N} has/ have been selected through said predetermined set of information 6;
- measuring the degree of similarity between said at least one image and said one or more further images PT₁₁,PT_{12...}PT_{1N}, PT₂₁,PT_{22...}PT_{2N},... PT_{N1},PT_{N2...}PT_{NN}.

In this described embodiment said recognition unit compares said at least one image with each further image of a predetermined diamond, selected through said predetermined set of information. However, said recognition unit can be configured for performing a comparison of said at least one image with each further image of each predetermined diamond D₁,D₂...D_{N}, without thereby departing from the scope of the invention.

Furthermore, said image acquiring means have an optical axis A.

In a first embodiment of the identification system that it is described, said image acquiring means comprise a digital camera 14 and said optical axis A is perpendicular to said table 21.

In particular, according to the invention, the comparison between the image(s) of a first part of said diamond 2, acquired from said image acquiring means 14 and further image(s) of a further first part T₁ , T₂ ... T_{N} of said predetermined diamonds D₁ , D₂ ... D_{N} , is based on the statistical correlation between said at least an image and said at least one further image.

In this specific case the degree of similarity is the statistical correlation coefficient between the acquired image from said image acquiring means 14 and the further image saved in the database DB.

In an alternative, the comparison between the image(s) of a first part of said diamond 2, acquired from said image acquiring means 14 and the further images of a further first part T₁ , T₂ ... T_{N} of said predetermined diamonds D₁ , D₂ ... D_{N} can be performed using a pixel-by-pixel subtraction between said image(s) and said further images.

In this alternative, the degree of similarity is given by the number equal pixels.

By the way, the comparison between said image (s) and said further image(s) with the aim of measuring the degree of similarity can be based on any known method, without thereby departing from the scope of the invention.

Figure 8 shows a table which reports images PT₁₁,PT_{12...}PT_{1N}, PT₂₁,PT_{22...}PT_{2N},... PT_{N1},PT_{N2...}PT_{NN} associated to each predetermined diamond D₁,D₂...D_{N} and related to a first part of said diamond that, in this embodiment, includes (as already said) at least a first portion of the respective table T₁ , T₂ ... T_{N}.

Although not shown in the figures, said identification system can comprise a reader configured to read said predetermined set of information 6.

Said recognition unit 16 compares said at least one image with at least a further image of said predetermined multifaceted precious stone D₁,D₂...D_{N}, selected through said predetermined set of information 6.

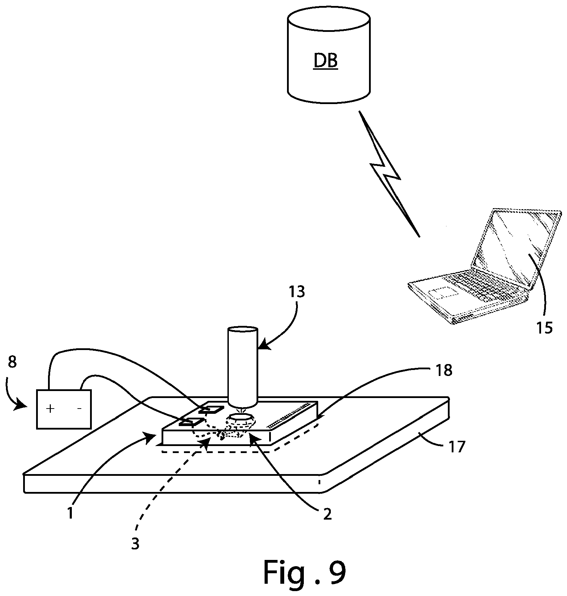

A second embodiment of the identification system for identifying a multifaceted precious stone is shown in Figure 9.

Differently from the first embodiment described above, said image acquiring means comprise an optical group 13 and said comparison means include a display 15.

In particular, said optical group 13 includes at least a lens of magnification.

In said second embodiment, a person compares the image of the diamond 2 arranged in the anti-counterfeiting device obtained through said optical group 13 and at least a further stored image in database DB and displayed on said display 15.

Said anti-counterfeiting device includes a predetermined set of information 6 configured to select a predetermined diamond, so said one or more images to be compared will be limited at the image (s) of said predetermined diamond D₁,D₂...D_{N} selected by said predetermined set of information 6.

However, like already said, it is possible to compare said at least image with each additional image of every predetermined diamond D₁,D₂...D_{N}, without thereby departing from the scope of the invention

With reference to both the embodiments of the identification system, said first part of said diamond includes at least a first portion of said table 21. However, what has been said for each embodiment of the identification system applies also when said first part of said diamond comprises at least a second portion of at least a second facet (further to at least a first portion of said table) or only said at least a second portion. Furthermore, always referring to both the embodiments of the identification system described above, as can be seen in figures 7 and 9, it is preferable that said identification system includes a base 17 and positioning means 18 for arranging said anti-counterfeiting device in a such way that the position of said counterfeiting device with respect to said base 17 is fixed.

In both the embodiments of the identification system, said positioning means 18 include a seat for accommodate at least partially said anti-counterfeiting device, placed on said base 17.

Advantageously, as already said, the anti-counterfeiting device allows to a buyer or to a user of a product to have the certainty that said product is an original product.

Another advantage is given by the fact that the anti-counterfeiting device can be used also as a label of a product.

Furthermore, the identification system allows to recognize the multifaceted precious stone placed in the anti-counterfeiting device and allows to a buyer or user of said anti-counterfeiting device to verify whether the product that has been bought or used is the product associated to the anti-counterfeiting device.

The present invention has been described by way of illustration, but not by way of limitation, according to its preferred embodiments, but it is to be understood that variations and/or modifications may be made by those skilled in the art without departing from the relative scope of protection, as defined by the attached claims.

## Claims

1. An anti-counterfeiting device for verification of the origin of a product when the anti-counterfeiting device is associated with the product, the anti-counterfeiting device comprising:
- a supporting element (1);
- a multifaceted precious stone (2), arranged at least partially inside said supporting element (1) in such a way that said multifaceted precious stone (2) is in a first predetermined fixed position with respect to said supporting element (1) and has a first part exposed to the outside, said first part comprising at least a first portion of a first facet (21) termed "table" and/or at least a second portion of at least a second facet (22) disposed on a part of said multifaceted precious stone (2) termed "crown" (C); and
- lighting means (3) for lighting said multifaceted precious stone (2), where said lighting means are configured to emit a light radiation and arranged in a second predetermined fixed position with respect to said supporting element (1) and to said multifaceted precious stone (2) in such a way that said light radiation insists on a second part of said multifaceted precious stone (2), different from said first part, where said second part comprises at least a third portion of at least a third facet (23) arranged on a part of said multifaceted precious stone (2) termed "pavilion" (P) and wherein said lighting means (3) are arranged inside said supporting element (1).

2. The anti-counterfeiting device according to claim 1, **characterized in that** said anti-counterfeiting device comprises a first seat for housing at least partially said multifaceted precious stone (2), arranged inside said supporting element (1), and/or a second seat for housing at least partially said lighting means (3), arranged inside said supporting element (1).

3. An anti-counterfeiting device for verification of the origin of a product when the anti-counterfeiting device is associated with the product, the anti-counterfeiting device comprising:
- a supporting element (1); and
- a multifaceted precious stone (2), arranged at least partially inside said supporting element (1) in such a way that said multifaceted precious stone (2) is in a first predetermined fixed position with respect to said supporting element (1) and has a first part exposed to the outside, said first part comprising at least a first portion of a first facet (21) termed "table" and/or at least a second portion of at least a second facet (22) disposed on a part of said multifaceted precious stone (2) termed "crown" (C);
wherein said supporting element (1) comprises a first surface or upper surface (1A), a second surface or lower surface (1B), opposite to said first surface (1A), and a third surface or lateral surface (1C), arranged between said first surface (1A) and said second surface (1B); wherein said supporting element (1) has at least one opening (10) to allow a quantity of light radiation from lighting means (3) external to said supporting element (1) to enter into said supporting element (1), wherein said at least one opening (10) is positioned on said first surface (1A) and/or said second surface (1B) and/or said third surface (1C), and a cavity (11) extending from said at least opening (10) to said multifaceted precious stone (2) to allow said quantity of light radiation to reach said multifaceted precious stone in such a way that said quantity of light radiation insists on a second part of said multifaceted precious stone (2), different from said first part, wherein said second part comprises at least a third portion of at least a third facet (23) arranged on a part of said multifaceted precious stone (2) termed "pavilion" (P).

4. The anti-counterfeiting device according to claim 3, **characterized in that** said anti-counterfeiting device comprises a closing element (100) for closing said opening (10), and **in that** said closing element (100) has a predetermined first degree of transparency, where said predetermined first degree of transparency is such to allow the passage of a first quantity of said light radiation inside said cavity (11).

5. The anti-counterfeiting device according to claim 3, **characterized in that** an element (1000) having a predetermined second degree of transparency is positioned inside said cavity (11), where said second predetermined degree of transparency is such to allow the passage of a second quantity of said light radiation inside said cavity (11) .

6. The anti-counterfeiting device according to any one of claims 1-2, **characterized in that** said supporting element (1) comprises a first terminal (5A) and a second terminal (5B) to allow the application of power supplying means (8) for supplying power to said lighting means (3), where said first terminal (5A) and said second terminal (5B) are arranged on said supporting element (1) and connected to said lighting means (3) through respectively first electrical connection means (4A) and second electrical connection means (4B).

7. The anti-counterfeiting device according to any one of claims 1-2, **characterized in that** said anti- counterfeiting device comprises power supplying means (8) for supplying power to said lighting means (3); said supplying means (8) being arranged inside said supporting element (1) or outside of said supporting element (1).

8. The anti-counterfeiting device according to claim 7, **characterized in that** said power supplying means (8) are configured to be activated by induction energy transfer.

9. An identifying system for identifying a multifaceted precious stone, said identifying system comprising:
- the anti-counterfeiting device according to anyone of the previous claims;
- image acquiring means (13,14) for acquiring at least one image of said multifaceted precious stone (2), where the said image acquiring means (13,14) are arranged in such a way that said at least one image is related to said first part of said multifaceted previous stone (2); said image acquiring means (13,14) being arranged at a predetermined distance from said multifaceted precious stone (2);
- a database (DB) in which the following data are stored:
▪ a unique identification code of one or more predetermined multifaceted precious stones (D₁,D₂...D_{N}),
▪ one or more further images (PT₁₁,PT_{12...}PT_{1N}, PT₂₁,PT_{22...}PT_{2N}, ...PT_{N1},PT_{N2...}PT_{NN}) concerning a further first part of each of said predetermined multifaceted precious stones (D₁,D₂,...,D_{N}), where said further first part comprises at least a further first portion of a further first facet termed "table" and/or at least a further second portion of at least a further second facet disposed on a further part of said predetermined precious stone termed "crown", each further image (PT₁₁,PT_{12...}PT_{1N}, PT₂₁,PT_{22...}PT_{2N}, ... PT_{N1},PT_{N2...}PT_{NN}) being obtained at a respective predetermined further distance from said predetermined multifaceted precious stone (D₁,D₂...D_{N}) when the respective predetermined multifaceted precious stone (D₁,D₂...D_{N}) has been lighted from a further light radiation insisting on a further second part of said predetermined precious stone (D₁,D₂...D_{N}), where said further second part comprises at least a further third portion of at least a further third facet disposed on a further part of said predetermined multifaceted precious stone termed "pavilion" , and
▪ one or more data of a product associated to each of said predetermined multifaceted precious stones (D₁,D₂...D_{N}); and
- comparison means (15,16) for comparing said at least one image, acquired with said image acquiring means (13,14), with one or more further images (PT₁₁, PT₁₂...PT_{1N}, PT₂₁,PT₂₂...PT_{2N}, ... PT_{N1},PT_{N2}...PT_{NN}), stored in said database (DB); where said comparison means (15,16) are connected to said database (DB).

10. The identifying system according to claim 9, **characterized in that** said image acquiring means (13) comprise an optical group comprising at least one magnifying lens, and **in that** said comparison means (15) comprise a display.

11. The identifying system according to claim 9, **characterized**
**in that** said image acquiring means (14) are digital image acquiring means,
**in that** said comparison means (16) comprise a recognition unit for recognizing said multifaceted precious stone (2) from said first part of said multifaceted precious stone (2), where said recognition unit is connected to said image acquiring means (14) and is configured to:
▪ performing a comparison between at least one image, acquired by said image acquiring means (14), and one or more further images (PT₁₁, PT₁₂...PT_{1N}, PT₂₁,PT₂₂...PT_{2N},... PT_{N1,}PT_{N2}...PT_{NN}), stored in said database (DB); and
▪ measuring the degree of similarity between said at least one image and said one or more further images (PT₁₁,PT_{12...}PT_{1N}, PT₂₁,PT_{22...}PT_{2N}, ... PT_{N1},PT_{N2...}PT_{NN}).

12. The identifying system according to any one of claims 9-11, **characterized in that** said anti-counterfeiting device comprises a predetermined information set (6) configured to select a predetermined multifaceted precious stone (D₁,D₂...D_{N}); said at least one image being compared only with one or more further images of said predetermined multifaceted stone precious (D₁,D₂...D_{N}) selected by said predetermined information set (6).

13. The identifying system according to the previous claim, **characterized in that** said predetermined information set (6) comprises a sequence of characters identifying the unique identification code of a multifaceted precious stone (D₁,D₂,...,D_{N}), stored in said database (DB).

14. The identifying system according to claim 12 or 13, **characterized in that** said predetermined information set (6) is arranged on said anti-counterfeiting device or stored in a QR code, arranged on said anti-counterfeiting device, or stored in a bar code, arranged on said anti-counterfeiting device, or stored in a electronic and/or magnetic support, arranged on said anti-counterfeiting device.

15. The identifying system according to any one of claims 9-14, **characterized in that** said identifying system comprises a base (17) and positioning means (18) for positioning said anti-counterfeiting device in such a way that the position of said anti-counterfeiting device is fixed with respect to said base (17).

## Patentansprüche

1. Fälschungssicherungsvorrichtung zur Überprüfung der Herkunft eines Produkts, wenn die Fälschungssicherungsvorrichtung mit dem Produkt verknüpft ist, wobei die Fälschungssicherungsvorrichtung umfasst:
- ein Trageelement (1);
- einen facettenreichen Edelstein (2), der mindestens teilweise im Inneren des Trageelements (1) so angeordnet ist, dass sich der facettenreiche Edelstein (2) in einer ersten vorbestimmten ortsfesten Position in Bezug auf das Trageelement (1) befindet und einen ersten Teil aufweist, der nach außen hin freiliegt, wobei der erste Teil mindestens einen ersten Abschnitt einer ersten Facette (21), die als "Tafel" bezeichnet wird, und/oder mindestens einen zweiten Abschnitt mindestens einer zweiten Facette (22) umfasst, die auf einem Teil des facettenreichen Edelsteins (2) angeordnet ist, der als "Krone" (C) bezeichnet wird; und
- Leuchtmittel (3) zum Beleuchten des facettenreichen Edelsteins (2), wobei die Leuchtmittel zum Emittieren einer Lichtstrahlung konfiguriert sind und in einer zweiten vorbestimmten ortsfesten Position in Bezug auf das Trageelement (1) und den facettenreichen Edelstein (2) so angeordnet sind, dass die Lichtstrahlung auf einem zweiten Teil des facettenreichen Edelsteins (2) besteht, der sich von dem ersten Teil unterscheidet, wobei der zweite Teil mindestens einen dritten Abschnitt von mindestens einer dritten Facette (23) umfasst, die auf einem Teil des facettenreichen Edelsteins (2) angeordnet ist, der als "Pavillon" (P) bezeichnet wird, und wobei die Leuchtmittel (3) im Inneren des Trageelements (1) angeordnet sind.

2. Fälschungssicherungsvorrichtung nach Anspruch 1, **dadurch gekennzeichnet, dass** die Fälschungssicherungsvorrichtung einen ersten Sitz zum Unterbringen mindestens teilweise des facettenreichen Edelsteins (2), der innerhalb des Trageelements (1) angeordnet ist, und/oder einen zweiten Sitz zum Unterbringen mindestens teilweise der Leuchtmittel (3), die innerhalb des Trageelements (1) angeordnet ist, umfasst.

3. Fälschungssicherungsvorrichtung zur Überprüfung der Herkunft eines Produkts, wenn die Fälschungssicherungsvorrichtung mit dem Produkt verknüpft ist, wobei die Fälschungssicherungsvorrichtung umfasst:
- ein Trageelement (1); und
- einen facettenreichen Edelstein (2), der mindestens teilweise im Inneren des Trageelements (1) so angeordnet ist, dass sich der facettenreiche Edelstein (2) in einer ersten vorbestimmten ortsfesten Position in Bezug auf das Trageelement (1) befindet und einen ersten Teil aufweist, der nach außen hin freiliegt, wobei der erste Teil mindestens einen ersten Abschnitt einer ersten Facette (21), die als "Tafel" bezeichnet wird, und/oder mindestens einen zweiten Abschnitt mindestens einer zweiten Facette (22) umfasst, die auf einem Teil des facettenreichen Edelsteins (2) angeordnet ist, der als "Krone" (C) bezeichnet wird;
wobei das Trageelement (1) eine erste Oberfläche oder obere Oberfläche (1A), eine zweite Oberfläche oder untere Oberfläche (1B), die der ersten Oberfläche (1A) gegenüberliegt, und eine dritte Oberfläche oder seitliche Oberfläche (1C) umfasst, die zwischen der ersten Oberfläche (1A) und der zweiten Oberfläche (1B) angeordnet ist;
wobei das Trageelement (1) mindestens eine Öffnung (10) aufweist, um zu ermöglichen, dass eine Menge von Lichtstrahlung von Leuchtmitteln (3) außerhalb des Trageelements (1) in das Trageelement (1) eintritt, wobei die mindestens eine Öffnung (10) auf der ersten Oberfläche (1A) und/oder der zweiten Oberfläche (1B) und/oder der dritten Oberfläche (1C) angeordnet ist, und einen Hohlraum (11), der sich von der mindestens einen Öffnung (10) zu dem facettenreichen Edelstein (2) erstreckt, um zu ermöglichen, dass die Lichtstrahlungsmenge den facettenreichen Edelstein so erreicht, dass die Menge von Lichtstrahlung auf einem zweiten Teil des facettenreichen Edelsteins (2) besteht, der sich von dem ersten Teil unterscheidet, wobei der zweite Teil mindestens einen dritten Abschnitt von mindestens einer dritten Facette (23) umfasst, die auf einem Teil des facettenreichen Edelsteins (2) angeordnet ist, der als "Pavillon" (P) bezeichnet wird.

4. Fälschungssicherungsvorrichtung nach Anspruch 3, **dadurch gekennzeichnet, dass** die Fälschungssicherungsvorrichtung ein Verschlusselement (100) zum Verschließen der Öffnung (10) umfasst, und dass das Verschlusselement (100) einen vorbestimmten ersten Transparenzgrad aufweist, wobei der vorbestimmte erste Transparenzgrad so beschaffen ist, dass er den Durchgang einer ersten Menge von der Lichtstrahlung innerhalb des Hohlraums (11) ermöglicht.

5. Fälschungssicherungsvorrichtung nach Anspruch 3, **dadurch gekennzeichnet, dass** ein Element (1000), das einen vorbestimmten zweiten Transparenzgrad aufweist, innerhalb des Hohlraums (11) angeordnet ist, wobei der zweite vorbestimmte Transparenzgrad so beschaffen ist, dass er den Durchgang einer zweiten Menge von der Lichtstrahlung innerhalb des Hohlraums (11) ermöglicht.

6. Fälschungssicherungsvorrichtung nach einem der Ansprüche 1-2, **dadurch gekennzeichnet, dass** das Trageelement (1) einen ersten Anschluss (5A) und einen zweiten Anschluss (5B) umfasst, um die Anwendung von Stromversorgungsmitteln (8) zum Versorgen der Leuchtmittel (3) mit Strom zu ermöglichen, wobei der erste Anschluss (5A) und der zweite Anschluss (5B) auf dem Trageelement (1) angeordnet und mit den Leuchtmitteln (3) über erste elektrische Verbindungsmittel (4A) bzw. zweite elektrische Verbindungsmittel (4B) verbunden sind.

7. Fälschungssicherungsvorrichtung nach einem der Ansprüche 1-2, **dadurch gekennzeichnet, dass** die Fälschungssicherungsvorrichtung Stromversorgungsmittel (8) zum Versorgen der Leuchtmittel (3) mit Strom umfasst, wobei die Versorgungsmittel (8) innerhalb des Trageelements (1) oder außerhalb des Trageelements (1) angeordnet sind.

8. Fälschungssicherungsvorrichtung nach Anspruch 7, **dadurch gekennzeichnet, dass** die Stromversorgungsmittel (8) zum Aktivieren durch induktive Energieübertragung konfiguriert sind.

9. Identifizierungssystem zum Identifizieren eines facettenreichen Edelsteins, wobei das Identifizierungssystem umfasst:
- die Fälschungssicherungsvorrichtung nach einem der vorhergehenden Ansprüche;
- Bilderfassungsmittel (13, 14) zum Erfassen mindestens eines Bildes des facettenreichen Edelsteins (2), wobei die Bilderfassungsmittel (13, 14) so angeordnet sind, dass sich das mindestens eine Bild auf den ersten Teil des facettenreichen Edelsteins (2) bezieht; wobei die Bilderfassungsmittel (13, 14) in einem vorbestimmten Abstand von dem facettenreichen Edelstein (2) angeordnet sind;
- eine Datenbank (DB), in der die folgenden Daten gespeichert sind:
▪ ein eindeutiger Identifikationscode eines oder mehrerer vorbestimmter facettenreicher Edelsteine (D₁,D₂...D_{N}),
▪ ein oder mehrere weitere Bilder (PT₁₁, PT_{12...}PT_{1N}, PT₂₁, PT₂₂...PT2_{N}, ...PT_{N1}, PT_{N2}...PT_{NN}), die einen weiteren ersten Teil eines jeden der vorbestimmten facettenreichen Edelsteine (D₁, D₂..., D_{N}) betreffem, wobei der weitere erste Teil mindestens einen weiteren ersten Abschnitt einer weiteren ersten Facette, die als "Tafel" bezeichnet wird, und/oder mindestens einen weiteren zweiten Abschnitt mindestens einer weiteren zweiten Facette umfasst, die auf einem weiteren Teil des vorbestimmten Edelsteins, der als "Krone" bezeichnet wird, angeordnet ist, wobei jedes weitere Bild (P₁₁, PT₁₂...PT_{1N}, PT₂₁, PT₂₂... PT_{2N}, ... PT_{N1}, PT_{N2}... PT_{NN}) in einem entsprechenden vorbestimmten weiteren Abstand von dem vorbestimmten facettenreichen Edelstein (D₁, D_{2...}D_{N}) erhalten wird, wenn der entsprechende vorbestimmte facettenreiche Edelstein (D₁, D_{2...}D_{N}) von einer weiteren Lichtstrahlung beleuchtet wurde, die auf einem weiteren zweiten Teil des vorbestimmten Edelsteins (D₁, D_{2...}D_{N}) besteht, wobei der weitere zweite Teil mindestens einen weiteren dritten Abschnitt von mindestens einer weiteren dritten Facette umfasst, die auf einem weiteren Teil des vorbestimmten facettenreichen Edelsteins angeordnet ist, der als "Pavillon" bezeichnet wird, und
▪ ein oder mehrere Daten eines Produkts, das mit jedem der vorbestimmten facettenreichen Edelsteine (D₁, D_{2...}D_{N}) knüpft ist; und
- Vergleichsmittel (15, 16) zum Vergleichen des mindestens einen Bildes, das mit den Bilderfassungsmitteln (13, 14) erfasst wurde, mit einem oder mehreren weiteren Bildern (PT₁₁, PT_{12...}PT_{1N}, PT₂₁, PT₂₂...PT2_{N}, ... PT_{N1}, PT_{N2}...PT_{NN}), die in der Datenbank (DB) gespeichert sind; wobei die Vergleichsmittel (15, 16) mit der Datenbank (DB) verbunden sind.

10. Identifizierungssystem nach Anspruch 9, **dadurch gekennzeichnet, dass** die Bilderfassungsmittel (13) eine optische Gruppe umfassend mindestens eine Vergrößerungslinse umfassen und dass die Vergleichsmittel (15) eine Anzeige umfassen.

11. Identifizierungssystem nach Anspruch 9, **dadurch gekennzeichnet,**
**dass** die Bilderfassungsmittel (14) digitale Bilderfassungsmittel sind,
**dass** die Vergleichsmittel (16) eine Erkennungseinheit zum Erkennen des facettenreichen Edelsteins (2) anhand des ersten Teils des facettenreichen Edelsteins (2) umfassen, wobei die Erkennungseinheit mit den Bilderfassungsmitteln (14) verbunden ist und konfiguriert ist zum:
▪ Durchführen eines Vergleichs zwischen mindestens einem Bild, das von den Bilderfassungsmitteln (14) erfasst wurde, und einem oder mehreren weiteren Bildern (PT₁₁, PT₁₂...PT_{1N}, PT₂₁, PT₂₂...PT2_{N}, ... PT_{N1}, PT_{N2}...PT_{NN}), die in der Datenbank (DB) gespeichert sind; und
▪ Messen des Grades der Ähnlichkeit zwischen dem mindestens einen Bild und dem einen oder den mehreren weiteren Bildern (PT₁₁, PT₁₂...PT_{1N}, PT₂₁, PT₂₂...PT_{2N}, ... PT_{N1}, PT_{N2}...PT_{NN}).

12. Identifizierungssystem nach einem der Ansprüche 9-11, **dadurch gekennzeichnet, dass** die Fälschungssicherungsvorrichtung einen vorbestimmten Informationssatz (6) umfasst, der zum Auswählen eines vorbestimmten facettenreichen Edelsteins (D₁, D₂...D_{N}) konfiguriert ist; wobei das mindestens eine Bild nur mit einem oder mehreren weiteren Bildern des vorbestimmten facettenreichen Edelsteins (D₁, D₂...D_{N}) verglichen wird, der durch den vorbestimmten Informationssatz (6) ausgewählt wurde.

13. Identifizierungssystem nach dem vorhergehenden Anspruch, **dadurch gekennzeichnet, dass** der vorbestimmte Informationssatz (6) eine Folge von Zeichen umfasst, die den eindeutigen Identifikationscode eines facettenreichen Edelsteins (D₁, D₂, ..., D_{N}) identifizieren, der in der Datenbank (DB) gespeichert ist.

14. Identifizierungssystem nach Anspruch 12 oder 13, **dadurch gekennzeichnet, dass** der vorbestimmte Informationssatz (6) auf der Fälschungssicherungsvorrichtung angeordnet oder in einem QR-Code gespeichert ist, der auf der Fälschungssicherungsvorrichtung angeordnet ist, oder in einem Strichcode gespeichert ist, der auf der Fälschungssicherungsvorrichtung angeordnet ist, oder in einem elektronischen und/oder magnetischen Träger gespeichert ist, der auf der Fälschungssicherungsvorrichtung angeordnet ist.

15. Identifizierungssystem nach einem der Ansprüche 9-14, **dadurch gekennzeichnet, dass** das Identifizierungssystem eine Basis (17) und Positionierungsmittel (18) zum Positionieren der Fälschungssicherungsvorrichtung in einer derartigen Weise umfasst, dass die Position der Fälschungssicherungsvorrichtung in Bezug auf die Basis (17) fixiert ist.

## Revendications

1. Dispositif anti-contrefaçon pour la vérification de l'origine d'un produit lorsque le dispositif anti-contrefaçon est associé au produit, le dispositif anti-contrefaçon comprenant :
- un élément de support (1) ;
- une pierre précieuse à facettes multiples (2), agencée au moins partiellement à l'intérieur dudit élément de support (1) de telle sorte que ladite pierre précieuse à facettes multiples (2) se trouve dans une première position fixe prédéterminée par rapport audit élément de support (1) et présente une première partie apparente à l'extérieur, ladite première partie comprenant au moins une première portion d'une première facette (21) dite « table » et/ou au moins une deuxième portion d'au moins une deuxième facette (22) disposée sur une partie de ladite pierre précieuse à facettes multiples (2) dite « couronne » (C) ; et
- des moyens d'éclairage (3) permettant d'éclairer ladite pierre précieuse à facettes multiples (2), lesdits moyens d'éclairage étant conçus pour émettre un rayonnement lumineux et agencés dans une seconde position fixe prédéterminée par rapport audit élément de support (1) et à ladite pierre précieuse à facettes multiples (2) de telle sorte que ledit rayonnement lumineux insiste sur une deuxième partie de ladite pierre précieuse à facettes multiples (2), différente de ladite première partie, ladite deuxième partie comprenant au moins une troisième portion d'au moins une troisième facette (23) agencée sur une partie de ladite pierre précieuse à facettes multiples (2) dite « pavillon » (P) et dans lequel lesdits moyens d'éclairage (3) sont agencés à l'intérieur dudit élément de support (1).

2. Dispositif anti-contrefaçon selon la revendication 1, **caractérisé en ce que** ledit dispositif anti-contrefaçon comprend un premier logement pour loger au moins partiellement ladite pierre précieuse à facettes multiples (2), agencé à l'intérieur dudit élément de support (1) et/ou un second logement pour loger au moins partiellement lesdits moyens d'éclairage (3), agencés à l'intérieur dudit élément de support (1).

3. Dispositif anti-contrefaçon pour la vérification de l'origine d'un produit lorsque le dispositif anti-contrefaçon est associé au produit, le dispositif anti-contrefaçon comprenant :
- un élément de support (1) ; et
- une pierre précieuse à facettes multiples (2), agencée au moins partiellement à l'intérieur dudit élément de support (1) de telle sorte que ladite pierre précieuse à facettes multiples (2) se trouve dans une première position fixe prédéterminée par rapport audit élément de support (1) et présente une première partie apparente à l'extérieur, ladite première partie comprenant au moins une première portion d'une première facette (21) dite « table » et/ou au moins une deuxième portion d'au moins une deuxième facette (22) disposée sur une partie de ladite pierre précieuse à facettes multiples (2) dite « couronne » (C) ;
dans lequel ledit élément de support (1) comprend une première surface ou surface supérieure (1A), une deuxième surface ou surface inférieure (1B) opposée à ladite première surface (1A) et une troisième surface ou surface latérale (1C), agencée entre ladite première surface (1A) et ladite deuxième surface (1B) ;
dans lequel ledit élément de support (1) présente au moins une ouverture (10) pour permettre à une quantité de rayonnement lumineux provenant des moyens d'éclairage (3) extérieurs audit élément de support (1) d'entrer dans ledit élément de support (1), dans lequel ladite au moins une ouverture (10) est positionnée sur ladite première surface (1A) et/ou ladite deuxième surface (1B) et/ou ladite troisième surface (1C) et une cavité (11) s'étendant de ladite au moins une ouverture (10) à ladite pierre précieuse à facettes multiples (2) pour permettre à ladite quantité de rayonnement lumineux d'atteindre ladite pierre précieuse à facettes multiples de telle sorte que ladite quantité de rayonnement lumineux insiste sur une deuxième partie de ladite pierre précieuse à facettes multiples (2), différente de ladite première partie, dans lequel ladite deuxième partie comprend au moins une troisième portion d'au moins une troisième facette (23) agencée sur une partie de ladite pierre précieuse à facettes multiples (2) dite « pavillon » (P).

4. Dispositif anti-contrefaçon selon la revendication 3, **caractérisé en ce que** ledit dispositif anti-contrefaçon comprend un élément de fermeture (100) pour fermer ladite ouverture (10) et **en ce que** ledit élément de fermeture (100) a un premier degré de transparence prédéterminé, ledit premier degré de transparence prédéterminé étant tel qu'il permet le passage d'une première quantité dudit rayonnement lumineux à l'intérieur de ladite cavité (11).

5. Dispositif anti-contrefaçon selon la revendication 3, **caractérisé en ce qu'**un élément (1000) ayant un second degré de transparence prédéterminé est positionné à l'intérieur de ladite cavité (11), ledit second degré de transparence prédéterminé étant tel qu'il permet le passage d'une seconde quantité dudit rayonnement lumineux à l'intérieur de ladite cavité (11).

6. Dispositif anti-contrefaçon selon l'une quelconque des revendications 1 à 2, **caractérisé en ce que** ledit élément de support (1) comprend une première borne (5A) et une seconde borne (5B) pour permettre l'application de moyens d'alimentation en énergie (8) pour fournir de l'énergie auxdits moyens d'éclairage (3), ladite première borne (5A) et ladite seconde borne (5B) sont agencées sur ledit élément de support (1) et connectées auxdits moyens d'éclairage (3) respectivement par le biais d'un premier moyen de connexion électrique (4A) et d'un second moyen de connexion électrique (4B).

7. Dispositif anti-contrefaçon selon l'une quelconque des revendications 1 à 2, **caractérisé en ce que** ledit dispositif anti-contrefaçon comprend des moyens d'alimentation en énergie (8) pour fournir de l'énergie auxdits moyens d'éclairage (3) ; lesdits moyens d'alimentation (8) étant agencés à l'intérieur dudit élément de support (1) ou à l'extérieur dudit élément de support (1).

8. Dispositif anti-contrefaçon selon la revendication 7, **caractérisé en ce que** lesdits moyens d'alimentation en énergie (8) sont configurés pour être activés par transfert d'énergie par induction.

9. Système d'identification pour identifier une pierre précieuse à facettes multiples, ledit système d'identification comprenant :
- le dispositif anti-contrefaçon selon l'une quelconque des revendications précédentes ;
- des moyens d'acquisition d'image (13, 14) pour acquérir au moins une image de ladite pierre précieuse à facettes multiples (2), lesdits moyens d'acquisition d'image (13, 14) étant agencés de telle sorte que ladite au moins une image soit liée à ladite première partie de ladite pierre précédente à facettes multiples (2) ; lesdits moyens d'acquisition d'image (13, 14) étant agencés à une distance prédéterminée de ladite pierre précieuse à facettes multiples (2) ;
- une base de données (DB) dans laquelle sont stockées les données suivantes :
▪ un code d'identification unique d'une ou plusieurs pierres précieuses à facettes multiples prédéterminées (D₁, D₂...D_{N}),
▪ une ou plusieurs autres images (PT₁₁, PT_{12...}PT_{1N}, PT₂₁, PT₂₂...PT_{2N}, ...PT_{N1}, PT_{N2}...PT_{NN}) concernant une autre première partie de chacune desdites pierres précieuses à facettes multiples prédéterminées (D₁, D₂..., D_{N}), ladite autre première partie comprenant au moins une autre première portion d'une autre première facette dite « table » et/ou au moins une autre deuxième portion d'au moins une autre deuxième facette disposée sur une autre partie de ladite pierre précieuse prédéterminée dite « couronne », chaque autre image (P₁₁, PT₁₂...PT_{1N}, PT₂₁, PT₂₂... PT_{2N}, ... PT_{N1}, PT_{N2}... PT_{NN}) étant obtenue à une autre distance prédéterminée respective de ladite pierre précieuse à facettes multiples prédéterminée (D₁, D_{2...}D_{N}) lorsque la pierre précieuse à facettes multiples prédéterminée respective (D₁, D_{2...}D_{N}) a été éclairée par un autre rayonnement lumineux insistant sur une autre deuxième partie de ladite pierre précieuse prédéterminée (D₁, D_{2...}D_{N}), ladite autre deuxième partie comprenant au moins une autre troisième portion d'au moins une autre troisième facette disposée sur une autre partie de ladite pierre précieuse à facettes multiples prédéterminée dite « pavillon » et
▪ une ou plusieurs données d'un produit associé à chacune desdites pierres précieuses à facettes multiples prédéterminées (D₁, D_{2...}DN) ; et
- des moyens de comparaison (15, 16) pour comparer ladite au moins une image, acquise avec lesdits moyens d'acquisition d'image (13, 14), une ou plusieurs autres images (PT₁₁, PT_{12...}PT_{1N}, PT₂₁, PT₂₂...PT2_{N}, ... PT_{N1}, PT_{N2}...PT_{NN}), étant stockées dans ladite base de données (DB) ; lesdits moyens de comparaison (15, 16) étant connectés à ladite base de données (DB).

10. Système d'identification selon la revendication 9, **caractérisé en ce que** lesdits moyens d'acquisition d'image (13) comprennent un groupe optique comprenant au moins une lentille grossissante et **en ce que** lesdits moyens de comparaison (15) comprennent un affichage.

11. Système d'identification selon la revendication 9, **caractérisé**
**en ce que** lesdits moyens d'acquisition d'image (14) sont des moyens d'acquisition d'image numérique,
**en ce que** lesdits moyens de comparaison (16) comprennent une unité de reconnaissance pour reconnaître ladite pierre précieuse à facettes multiples (2) à partir de ladite première partie de ladite pierre précieuse à facettes multiples (2), ladite unité de reconnaissance étant connectée auxdits moyens d'acquisition d'image (14) et étant configurée pour :
▪ effectuer une comparaison entre au moins une image, acquise par lesdits moyens d'acquisition d'image (14), et une ou plusieurs autres images (PT₁₁, PT₁₂...PT_{1N}, PT₂₁, PT₂₂...PT2_{N}, ... PT_{N1}, PT_{N2}...PT_{NN}), stockées dans ladite base de données (DB) ; et
▪ mesurer le degré de similitude entre ladite au moins une image et lesdites une ou plusieurs autres images (PT₁₁, PT₁₂...PT_{1N}, PT₂₁, PT₂₂...PT_{2N}, ... PT_{N1}, PT_{N2}...PT_{NN}).

12. Système d'identification selon l'une quelconque des revendications 9 à 11, **caractérisé en ce que** ledit dispositif anti-contrefaçon comprend un ensemble d'informations prédéterminées (6) configuré pour sélectionner une pierre précieuse à facettes multiples prédéterminée (D₁, D₂...D_{N}) ; ladite au moins une image étant comparée uniquement à une ou plusieurs autres images de ladite pierre précieuse à facettes multiples prédéterminée (D₁, D₂...D_{N}) sélectionnée par ledit ensemble d'informations prédéterminées (6).

13. Système d'identification selon la revendication précédente, **caractérisé en ce que** ledit ensemble d'informations prédéterminées (6) comprend une séquence de caractères identifiant le code d'identification unique d'une pierre précieuse à facettes multiples (D₁, D₂, ..., D_{N}), stocké dans ladite base de données (DB).

14. Système d'identification selon la revendication 12 ou 13, **caractérisé en ce que** ledit ensemble d'informations prédéterminées (6) est agencé sur ledit dispositif anti-contrefaçon ou stocké dans un code QR, agencé sur ledit dispositif anti-contrefaçon ou stocké dans un code à barres, agencé sur ledit dispositif anti-contrefaçon ou stocké dans un support électronique et/ou magnétique, agencé sur ledit dispositif anti-contrefaçon.

15. Système d'identification selon l'une quelconque des revendications 9 à 14, **caractérisé en ce que** ledit système d'identification comprend une base (17) et un moyen de positionnement (18) pour positionner ledit dispositif anti-contrefaçon de telle sorte que la position dudit dispositif anti-contrefaçon soit fixe par rapport à ladite base (17).
